# EUROPÄISCHE PATENTSCHRIFT

(11) **EP 3 637 220 B1**
(45) Veröffentlichungstag und Bekanntmachung des Hinweises auf die Patenterteilung: **15.11.2023**
(21) Anmeldenummer: 19198021.8
(22) Anmeldetag: 18.09.2019
(51) Int. Cl.: G05G 1/44, G05G 1/40

(54) **FUSSHEBELWERK FÜR EIN FAHRZEUG**
FOOT LEVER FOR A VEHICLE
MÉCANISME DE PÉDALE POUR UN VÉHICULE

(30) Priorität: 05.10.2018 DE 102018124637
(43) Veröffentlichungstag der Anmeldung: 15.04.2020
(73) Patentinhaber: BOGE Elastmetall GmbH, 49401 Damme (DE); Bayerische Motoren Werke Aktiengesellschaft, 80809 München (DE)
(72) Erfinder: WAGENER, Keit, 49143 Bissendorf (DE); HOFFMANN, Andreas, 49439 Steinfeld (DE); HERBORT, Fabian, 49078 Osnabrück (DE); TATURA, Alfred, 49401 Damme (DE); TIEMANN, Burkhard, 49152 Bad Essen (DE); SOUKOP, Florian, 80997 München (DE)
(74) Vertreter: Bossmeyer, Jörg Peter

(56) Entgegenhaltungen:
- EP-A2- 1 028 364
- DE-A1- 4 230 980
- DE-A1- 10 354 377
- US-A1- 2002 023 516

## Beschreibung

Die Erfindung betrifft ein Fußhebelwerk nach dem Oberbegriff des Anspruchs 1.

Die EP 1 028 364 A2 offenbart ein Fußhebelwerk für ein Fahrzeug, mit einem Lagerbock, einem Fußhebel, einem Lagerelement, mittels welchem der Fußhebel an dem Lagerbock um eine Fußhebelachse schwenkbar gelagert ist, einer an einem Lagerort an dem Fußhebel gelagerten Schubstange eines Hauptbremszylinders und einer mit dem Lagerbock verbundenen Verstellvorrichtung, mittels welcher das Lagerelement relativ zu dem Lagerbock von einer ersten Lagerelementposition in eine zweite Lagerelementposition verlagerbar ist. An dem Lagerbock ist eine einen Bewegungsweg für das Lagerelement definierende Führung vorgesehen, mittels welcher das Lagerelement entlang des Bewegungswegs von der ersten Lagerelementposition in die zweite Lagerelementposition verschiebbar geführt ist, wobei die an dem Lagerbock vorgesehene Führung durch zwei in Schenkeln des Lagerbocks vorgesehene, gerade Schlitze gebildet ist, in welche das Lagerelement eingreift. Die DE 103 54 377 A1 beschreibt ein verstellbares Fußhebelwerk, welches mindestens ein Anschlussteil mit einer in einem Schlitten gelagerten Schwenkachse, wobei der Schlitten gegenüber der Karosserie verschiebbar ausgeführt ist, und ein mit einer Übertragungseinheit gekoppeltes Übertragungselement je Anschlussteil aufweist, wobei der Schlitten mittelbar in einer Führung gehalten ist und mittels einer motorisch angetriebenen Spindelvorrichtung angetrieben wird. Die DE 42 30 980 A1 offenbart ein verstellbares Fußhebelwerk, bestehend aus Pedalen mit jeweils einem im Bereich eines Endabschnitts des Pedals angeordneten Lager und mit jeweils einem Anlenkpunkt für ein Übertragungselement zu der vom Pedal zu betätigenden Einrichtung, einer Welle durch die Lager der Pedale sowie einem fahrzeugfesten Lagerbock zur Lagerung der Welle, wobei die Welle über einen Verstellmechanismus um die Verbindungsachse der Anlenkpunkte schwenkbar ist. Die Verstellbewegung der Pedale wird durch Verdrehung der Welle bewirkt, die drehfest mit zumindest einer Verstellscheibe verbunden ist, die von zumindest einem ortsfesten Führungselement geführt wird, wobei der Lagerbock eine langlochartige Führung für die Welle aufweist. Die US 2002/0023516 A1 beschreibt ein verstellbares Fußhebelwerk mit mindestens einem Pedal mit jeweils einem im Bereich eines Endabschnittes des Pedals angeordneten Lager, mit jeweils einem Anlenkpunkt an eine Anlenkung für ein Übertragungselement zu einer von dem Pedal zu betätigenden Einrichtung, wobei das Fußhebelwerk zumindest einen inneren Pedallagerbock und einen äußeren Pedallagerbock aufweist, das Pedal am inneren Pedallagerbock angelenkt ist, und der innere Pedallagerbock am äußeren Pedallagerbock derart gelagert ist, dass der innere Pedallagerbock gegenüber dem äußeren Pedallagerbock verschieblich angeordnet ist, wobei bei einem Verschieben des inneren Pedallagerbockes das Pedal um eine theoretische Drehachse am Anlenkpunkt gedreht wird.

Der Grad des automatisierten bzw. autonomen Fahrens im PKW Bereich nimmt immer weiter zu. Viele Fahrzeuge sind bereits technisch in der Lage ohne aktives Eingreifen des Fahrers eigenständig von einem Ort zum nächsten zu fahren. In naher Zukunft wird es Fahrzeuge geben, die je nach Situation sowohl autonom fahren, als auch aktiv von einem Fahrer bewegt werden können. Während des autonomen Fahrens wird weder das Lenkrad noch das Fußhebelwerk vom Fahrer benötigt. In diesem Zustand sind diese Komponenten eher störend und belegen Platz im Innenraum bzw. engen den Fahrer in seiner Bewegungsfreiheit ein. Daher besteht der Wunsch, zum autonomen Fahren den Fußhebel wegbewegen und dadurch mehr Platz im Fußraum zur Verfügung stellen zu können. Eine Herausforderung dabei ist, den Fußhebel derart wegzubewegen, dass die Fahrzeugkomponente keine Betätigung erfährt.

Ausgehend hiervon liegt der Erfindung die Aufgabe zugrunde, bei einem Fußhebelwerk den Fußhebel derart verlagern zu können, dass die Fahrzeugkomponente durch den unbetätigten Fußhebel im verlagerten Zustand keine andere Betätigung erfährt als im nicht verlagerten Zustand.

Diese Aufgabe wird erfindungsgemäß mit einem Fußhebelwerk nach Anspruch 1 gelöst. Bevorzugte Weiterbildungen der Erfindung sind in den Unteransprüchen und in der nachfolgenden Beschreibung gegeben.

Bei einem erfindungsgemäßen Fußhebelwerk für ein Fahrzeug, mit einem Lagerbock, einem Fußhebel, einem Lagerelement, mittels welchem der Fußhebel an dem Lagerbock um eine Fußhebelachse schwenkbar gelagert ist, die in einer ersten Lagerelementposition des Lagerelements, insbesondere in einem unbetätigten Zustand des Fußhebels, auf einem Kreis oder Kreisbogen um einen an dem Fußhebel vorgesehenen Lagerort liegt, und einem an dem Lagerort an dem Fußhebel gelagerten Koppelglied zur Betätigung einer Fahrzeugkomponente, ist eine mit dem Lagerbock verbundene Verstellvorrichtung vorgesehen, mittels welcher das Lagerelement relativ zu dem Lagerbock von der ersten Lagerelementposition in eine zweite Lagerelementposition verlagerbar ist, in der die Fußhebelachse auf dem Kreis oder Kreisbogen liegt.

Durch das Verlagern des Lagerelements von der ersten Lagerelementposition in die zweite Lagerelementposition wird auch der Fußhebel verlagert. Da in beiden Lagerelementpositionen die Fußhebelachse auf demselben Kreis oder Kreisbogen um den Lagerort liegt, erfährt die Fahrzeugkomponente in der zweiten Lagerelementposition durch den unbetätigten Fußhebel keine andere Betätigung als in der ersten Lagerelementposition.

Bevorzugt ist der Kreis oder Kreisbogen, insbesondere bezüglich des Lagerbocks, ortsfest. Der Kreis oder Kreisbogen kann z.B. auch als Referenzkreis oder Referenzkreisbogen bezeichnet werden.

Bevorzugt ist der Fußhebel im unbetätigten Zustand relativ zu dem Lagerbock in einer ersten Ruhestellung angeordnet, wenn das Lagerelement in der ersten Lagerelementposition angeordnet ist. Vorzugsweise ist der Kreis oder Kreisbogen, insbesondere somit, auf die erste Ruhestellung des Fußhebels und/oder auf den unbetätigten Zustand des Fußhebels und/oder auf die erste Lagerelementposition bezogen. Vorteilhaft ist der Fußhebel im unbetätigten Zustand relativ zum Lagerbock in einer zweiten Ruhestellung angeordnet, wenn das Lagerelement in der zweiten Lagerelementposition angeordnet ist. Bevorzugt ist der Lagerort in der ersten Ruhestellung des Fußhebels und in der zweiten Ruhestellung des Fußhebels, vorzugsweise bezüglich des Lagerbocks, in der derselben Position angeordnet. Der Fußhebel im unbetätigten Zustand kann z.B. auch als unbetätigter Fußhebel bezeichnet werden.

Das Fußhebelwerk ist bevorzugt in das oder ein Fahrzeug eingebaut oder einbaubar. Das Fahrzeug ist insbesondere ein Kraftfahrzeug. Vorteilhaft ist das Fahrzeug zum autonomen Fahren ausgebildet. Die erste Lagerelementposition definiert bevorzugt eine Betriebsposition des Fußhebels, insbesondere in einem nicht autonomen Betrieb des Fahrzeugs. Die zweite Lagerelementposition definiert bevorzugt eine inaktive Position oder Ruheposition des Fußhebels, insbesondere in einem autonomen Betrieb des Fahrzeugs.

Das Lagerelement ist bevorzugt mit dem Fußhebel verbunden. Vorzugsweise ist das Lagerelement fest und/oder drehstarr und/oder starr mit dem Fußhebel verbunden. Vorteilhaft erstreckt sich das Lagerelement durch den Fußhebel hindurch. Alternativ ist das Lagerelement z.B. durch in Richtung der Fußhebelachse von dem Fußhebel beidseitig vorstehende Lagerelementstummel gebildet. Das Lagerelement ist vorzugsweise rotationssymmetrisch oder im Wesentlichen rotationssymmetrisch ausgebildet. Bevorzugt ist das Lagerelement zylindrisch oder im Wesentlichen zylindrisch ausgebildet. Insbesondere bildet das Lagerelement einen formstabilen Körper. Beispielsweise bildet das Lagerelement einen Bolzen oder ein Rohr. Vorzugsweise besteht das Lagerelement aus Kunststoff und/oder aus Metall. Bei dem Metall handelt es sich z.B. um Aluminium oder um einen Eisenwerkstoff, wie z.B. Stahl.

Das Lagerelement ist bevorzugt mit dem Lagerbock und/oder mit der Verstellvorrichtung verbunden. Vorzugsweise ist das Lagerelement relativ zu dem Lagerbock und/oder zu der Verstellvorrichtung um die Fußhebelachse drehbar. Beispielsweise ist das Lagerelement an dem Lagerbock um die Fußhebelachse drehbar gelagert. Ergänzend oder alternativ ist das Lagerelement z.B. an der Verstellvorrichtung um die Fußhebelachse drehbar gelagert.

Der Lagerbock umfasst bevorzugt zwei Wangenteile, zwischen denen insbesondere der Fußhebel angeordnet ist. Die Wangenteile sind oder verlaufen vorzugsweise parallel zueinander. Vorteilhaft umfasst der Lagerbock einen die Wangenteile miteinander verbindenden Basisteil, von dem insbesondere die Wangenteile vorstehen. Bevorzugt ist der Lagerbock, insbesondere mit seinem Basisteil, an der Karosserie des oder eines Fahrzeugs befestigt. Beispielsweise ist der Lagerbock, insbesondere mit seinem Basisteil, an der Spritzwand des oder eines Fahrzeugs befestigt. Vorzugsweise ist der Lagerbock mit einem Stützarm versehen. Vorteilhaft ist der Lagerbock mit seinem Stützarm an einem Querträger des oder eines Fahrzeugs befestigt. Insbesondere bildet der Lagerbock einen formstabilen Körper. Bevorzugt besteht der Lagerbock aus Kunststoff und/oder aus Metall und/oder aus Blech. Bei dem Metall und/oder dem Blech handelt es sich z.B. um Aluminium oder um einen Eisenwerkstoff, wie z.B. Stahl.

Der Fußhebel bildet bevorzugt einen formstabilen Körper. Insbesondere ist der Fußhebel länglich ausgebildet. Vorzugsweise weist der Fußhebel, insbesondere im Abstand zu der Fußhebelachse und/oder an einem freien Ende, eine Trittfläche auf. Vorteilhaft ist der Fußhebel durch Einleiten einer Kraft in die Trittfläche relativ zu dem Lagerbock, insbesondere um die Fußhebelachse, schwenkbar. Vorzugsweise besteht der Fußhebel aus Kunststoff und/oder aus Metall. Bei dem Metall handelt es sich z.B. um Aluminium oder um einen Eisenwerkstoff, wie z.B. Stahl.

Bevorzugt ist das Koppelglied, insbesondere an dem Lagerort, gelenkig an dem Fußhebel gelagert. Beispielsweise ist das Koppelglied, insbesondere an dem Lagerort, mittels eines Kugelgelenks an dem Fußhebel gelagert. Vorzugsweise weist das Koppelglied einen Kugelkopf auf, mittels welchem das Koppelglied, insbesondere an dem Lagerort, gelenkig an dem Fußhebel gelagert ist. Vorteilhaft weist der Fußhebel, insbesondere am Lagerort, eine, vorzugsweise den Kugelkopf umschließende, Kugelpfanne auf, in welcher der Kugelkopf, insbesondere gleitfähig, einliegt und/oder gelagert ist. Der Kugelkopf und die Kugelpfanne bilden insbesondere das Kugelgelenk. Der Lagerort wird beispielsweise durch den Mittelpunkt oder Kugelmittelpunkt des Kugelgelenks oder Kugelkopfes repräsentiert. Das Koppelglied bildet bevorzugt einen formstabilen Körper. Insbesondere ist das Koppelglied länglich ausgebildet. Beispielsweise ist das Koppelglied als Stange oder als Rohr ausgebildet. Vorzugsweise besteht das Lagerelement aus Kunststoff und/oder aus Metall. Bei dem Metall handelt es sich z.B. um Aluminium oder um einen Eisenwerkstoff, wie z.B. Stahl.

Bevorzugt ist das Koppelglied an die Fahrzeugkomponente angeschlossen oder anschließbar. Insbesondere ist das Koppelglied mit einem dem Fußhebel abgewandten Ende an der Fahrzeugkomponente angeschlossen oder anschließbar. Die Fahrzeugkomponente ist oder bildet bevorzugt einen Bremskraftverstärker oder einen Kupplungsgeberzylinder.

Aufgrund eines erhöhten Komfortanspruchs bei autonom fahrenden Fahrzeugen besteht der Wunsch, das Verlagern des Fußhebels automatisieren zu können.

Das Fußhebelwerk umfasst bevorzugt einen Antrieb. Insbesondere umfasst die Verstellvorrichtung den oder einen Antrieb oder ist durch diesen gebildet. Vorzugsweise ist die Verstellvorrichtung, insbesondere zum Verlagern des Lagerelements relativ zu dem Lagerbock von der ersten Lagerelementposition in die zweite Lagerelementposition, mittels des Antriebs antreibbar. Die Verstellvorrichtung wird z.B. auch als Verstellantrieb bezeichnet. Vorteilhaft ist der Antrieb mit dem Lagerbock verbunden und/oder an diesem gelagert oder befestigt. Bevorzugt ist der Antrieb ein elektrischer Antrieb. Durch den Antrieb ist das Verlagern des Fußhebels automatisierbar. Beispielsweise ist der Antrieb als Linearantrieb oder als rotatorischer Antrieb ausgebildet. Der Antrieb umfasst bevorzugt einen oder wenigstens einen, insbesondere elektrischen, Motor oder Aktor. Beispielsweise umfasst der Antrieb wenigstens einen, insbesondere elektrischen, Rotationsmotor oder rotatorischen Aktor. Alternativ umfasst der Antrieb z.B. wenigstens einen, insbesondere elektrischen, Linearmotor oder linearen Aktor.

Bevorzugt ist eine mit dem Antrieb, insbesondere elektrisch, verbundene Antriebssteuervorrichtung vorgesehen, mittels welcher der Antrieb steuerbar ist. Die Antriebssteuervorrichtung ist vorzugsweise mit einem übergeordneten Fahrzeugsteuergerät verbunden oder verbindbar.

Bevorzugt ist oder sind die Verstellvorrichtung und/oder der Antrieb bezüglich einer über das Lagerelement in die Verstellvorrichtung und/oder in den Antrieb eingeleiteten Last selbsthemmend ausgebildet. Somit kann z.B. sichergestellt werden, dass das Fußhebelwerk in jeder Position, die der Fußhebel im Rahmen eines Verlagerungsvorgangs des Lagerelements einnehmen kann, übliche Betriebslasten ertragen kann, die z.B. durch eine Betätigung des Fußhebels durch den Fahrer hervorgerufen werden. Derartige Betriebslasten sind während des oder eines Verlagerungsvorgangs des Lagerelements zwar als "Missbrauch" anzusehen, können in der Praxis aber auftreten.

Erfindungsgemäß ist an dem Lagerbock eine einen Bewegungsweg für das Lagerelement definierende Führung vorgesehen, mittels welcher das Lagerelement entlang des Bewegungswegs von der ersten Lagerelementposition in die zweite Lagerelementposition verschiebbar oder verlagerbar geführt ist. Dabei ist die erste Lagerelementposition durch ein erstes Ende des Bewegungswegs und die zweite Lagerelementposition durch ein zweites Ende des Bewegungswegs gegeben oder definiert. Insbesondere ist durch die Führung der Bewegungsweg des Lagerelements und/oder des Fußhebels während des oder eines Verlagerungsvorgangs des Lagerelements definierbar. Vorteilhaft verläuft der Bewegungsweg auf dem Kreis oder Kreisbogen oder nah am Kreis oder Kreisbogen, sodass die Fahrzeugkomponente während des oder eines Verlagerungsvorgangs des Lagerelements keine oder lediglich eine geringfügige, insbesondere zu vernachlässigende, Betätigung erfährt. Beispielsweise wird eine Orientierungsänderung des Koppelglieds um ±5° als zulässig angesehen.

Erfindungsgemäß ist die an dem Lagerbock vorgesehene Führung durch wenigstens eine oder zwei oder mehrere in dem Lagerbock vorgesehene Ausnehmung oder Ausnehmungen gebildet, in welche das Lagerelement eingreift. Dabei erstreckt oder erstrecken sich die Ausnehmung oder Ausnehmungen, vorzugsweise jeweils, entlang des Bewegungswegs. Vorteilhaft sind die Ausnehmungen gleich oder gleich verlaufend ausgebildet. Ferner ist die erste Lagerelementposition durch ein erstes Ende der oder jeder Ausnehmung und die zweite Lagerelementposition durch ein zweites Ende der oder jeder Ausnehmung gegeben oder definiert. Vorzugsweise sind die Ausnehmungen in den Wangenteilen des Lagerbocks vorgesehen. Insbesondere ist in jeder der Wangenteile jeweils eine der Ausnehmungen vorgesehen. Vorteilhaft erstreckt sich das Lagerelement zwischen den Wangenteilen.

Der Bewegungsweg und/oder die oder jede Ausnehmung ist oder verläuft zumindest abschnittsweise gekrümmt. Erfindungsgemäß umfasst der Bewegungsweg und/oder die oder jede Ausnehmung einen geraden Hauptabschnitt und einen sich an diesen anschließenden gekrümmten Endabschnitt. Beispielsweise ist der Bewegungsweg und/oder die oder jede Ausnehmung J-förmig ausgebildet. Dabei liegt das erste Ende des Bewegungswegs oder der oder jeder Ausnehmung im gekrümmten Endabschnitt und das zweite Ende des Bewegungswegs oder der oder jeder Ausnehmung im geraden Hauptabschnitt. Somit kann insbesondere sichergestellt werden, dass in der ersten Lagerelementposition das Lagerelement durch eine Betätigung des Fußhebels in eine Endlage der an dem Lagerbock vorgesehenen Führung gedrückt wird oder drückbar ist. Eine durch die Betätigung des Fußhebels in der ersten Lagerelementposition hervorgerufene Belastung wird daher z.B. in oder im Wesentlichen in den Lagerbock eingeleitet. Dies führt insbesondere dazu, dass der Antrieb durch eine Betätigung des Fußhebels in der ersten Lagerelementposition weniger belastet wird.

Gemäß einer Ausgestaltung weist die Verstellvorrichtung einen um eine Hebelachse schwenkbar an dem Lagerbock gelagerten Hebel auf, mit welchem das Lagerelement, vorzugsweise im Abstand zur Hebelachse, in Mitnahmeverbindung steht. Insbesondere ist das Lagerelement durch Schwenken des Hebels um die Hebelachse entlang des Bewegungswegs und/oder entlang der Ausnehmung oder Ausnehmungen, vorzugsweise von der ersten Lagerelementposition in die zweite Lagerelementposition, verlagerbar. Bevorzugt ist der Hebel mit dem Antrieb verbunden. Insbesondere ist der Hebel mittels des Antriebs um die Hebelachse relativ zu dem Lagerbock schwenkbar. Gemäß einer ersten Alternative greift der Antrieb im Abstand zu der Hebelachse, beispielsweise an einem an dem Hebel vorgesehenen Betätigungsarm, an dem Hebel an. In diesem Fall bildet der Antrieb insbesondere einen Linearantrieb. Der Antrieb oder Linearantrieb umfasst z.B. einen oder wenigstens einen Linearmotor oder linearen Aktor. Vorteilhaft sind der Betätigungsarm und das Lagerelement bezüglich der Hebelachse auf unterschiedlichen Seiten des Hebels vorgesehen. Gemäß einer zweiten Alternative greift der Antrieb am Ort oder im Bereich der Hebelachse an dem Hebel an. In diesem Fall bildet der Antrieb insbesondere einen rotatorischen Antrieb. Der Antrieb oder rotatorische Antrieb umfasst z.B. einen Rotationsmotor und ein Schneckengetriebe, mittels welchem der Rotationsmotor mit dem Hebel verbunden ist. Das Schneckengetriebe bietet insbesondere den Vorteil einer Selbsthemmung bei einer über den Hebel und/oder das Lagerelement in die Verstellvorrichtung und/oder in den Antrieb eingeleiteten Last. Somit kann z.B. der Antrieb geschont werden. Ferner kann gemäß der zweiten Alternative beispielsweise der Betätigungsarm entfallen.

Bevorzugt ist in dem Hebel eine, vorzugsweise längliche, Aussparung vorgesehen, in welche das Lagerelement eingreift. Somit ist insbesondere die Mitnahmeverbindung realisiert. Vorteilhaft weist der Hebel zwei die Aussparung begrenzende Zinken auf, die zu den freien Enden der Zinken hin offen ist. In diesem Fall wird der Hebel z.B. auch als Gabel bezeichnet.

Gemäß einer nicht beanspruchten Weiterbildung umfasst die Verstellvorrichtung wenigstens ein mit dem Lagerbock verbundenes oder zwei oder mehrere mit dem Lagerbock verbundene Schraubgetriebe, mittels welchem oder welchen das Lagerelement relativ zu dem Lagerbock von der ersten Lagerelementposition in die zweite Lagerelementposition verlagerbar ist. Das oder jedes Schraubgetriebe weist bevorzugt eine drehbar am Lagerbock gelagerte Gewindespindel und eine auf diese aufgeschraubte Spindelmutter auf, die insbesondere mit dem Lagerelement verbunden ist. Vorzugsweise ist das Lagerelement um die Fußhebelachse drehbar an der oder jeder Spindelmutter gelagert. Vorteilhaft ist das oder jedes Schraubgetriebe mittels des Antriebs antreibbar. Bevorzugt ist die oder jede Gewindespindel mittels des Antriebs um ihre Längsachse drehbar. Das oder die Schraubgetriebe sind beispielsweise auf einer Innenseite des Lagerbocks angeordnet. Vorzugsweise sind das oder die Schraubgetriebe zwischen den Wangenteilen angeordnet. Somit ist das Fußhebelwerk insbesondere kompakt oder bauraumsparend ausbildbar. Vorteilhaft ist an jedem der Wangenteile jeweils eines der Schraubgetriebe vorgesehen. Das oder die Schraubgetriebe bietet oder bieten insbesondere den Vorteil einer Selbsthemmung bei einer über das Lagerelement in die Verstellvorrichtung eingeleiteten Last. Somit kann z.B. der Antrieb geschont werden. Vorteilhaft bildet das oder bilden die Schraubgetriebe die Führung. Der Bewegungsweg ist oder verläuft in diesem Fall insbesondere geradlinig. Ferner kann gemäß dieser Weiterbildung beispielsweise der Hebel entfallen.

Gemäß einer Ausgestaltung ist der Antrieb als Linearantrieb ausgebildet und/oder die Verstellvorrichtung umfasst den oder einen Linearantrieb. Insbesondere ist das Lagerelement mittels des Linearantriebs relativ zu dem Lagerbock von der ersten Lagerelementposition in die zweite Lagerelementposition, vorzugsweise geradlinig, verlagerbar. Vorteilhaft ist der Linearantrieb mit dem Lagerbock verbunden. Der Linearantrieb umfasst bevorzugt einen oder wenigstens einen, insbesondere am Lagerbock befestigten oder gelagerten, Stator und ein oder wenigstens ein relativ zu diesem translatorisch bewegbares Hubglied, welches insbesondere mit dem Lagerelement verbunden ist. Vorzugsweise ist das Lagerelement um die Fußhebelachse drehbar an dem Hubglied gelagert. Vorteilhaft ist das Lagerelement mittels der an dem Lagerbock vorgesehenen Führung entlang des Bewegungswegs von der ersten Lagerelementposition in die zweite Lagerelementposition verschiebbar oder verlagerbar geführt. Der Bewegungsweg ist oder verläuft in diesem Fall insbesondere geradlinig oder linear.

Die Erfindung wird nachfolgend anhand einer bevorzugten Ausführungsform unter Bezugnahme auf die Zeichnung beschrieben. In der Zeichnung zeigen:
Fig. 1 eine schematische Seitenansicht eines Fußhebelwerks gemäß einer ersten Ausführungsform,
Fig. 2 eine schematische Ansicht eines Antriebs gemäß einer Abwandlung der ersten Ausführungsform,
Fig. 3 eine schematische Ansicht eines Fußhebelwerks gemäß einer nicht beanspruchten zweiten Ausführungsform und
Fig. 4 eine schematische Ansicht eines Fußhebelwerks gemäß einer nicht beanspruchten dritten Ausführungsform.

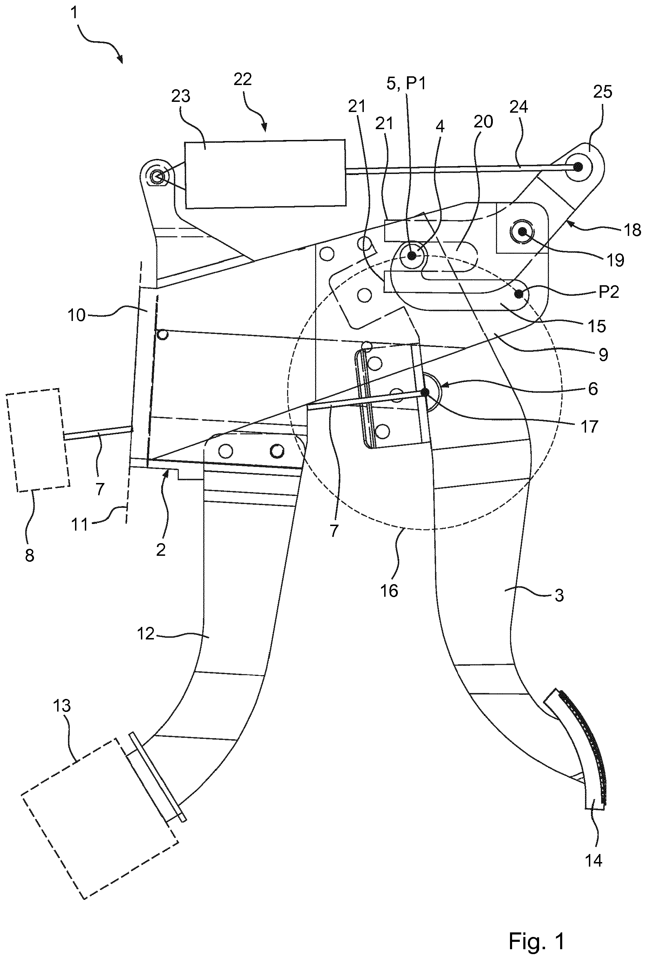

Aus Fig. 1 ist eine schematische Seitenansicht eines Fußhebelwerks 1 gemäß einer ersten Ausführungsform ersichtlich, welches einen Lagerbock 2, einen Fußhebel 3, ein sich durch den Fußhebel 3 hindurch erstreckendes Lagerelement 4, mittels welchem der Fußhebel 3 an dem Lagerbock 2 um eine Fußhebelachse 5, die in Fig. 1 senkrecht zur Zeichenebene verläuft, schwenkbar gelagert ist, und ein an dem Fußhebel 3 mittels eines Kugelgelenks 6 gelagertes Koppelglied 7 zur Betätigung einer Fahrzeugkomponente 8 aufweist, die z.B. durch einen Bremskraftverstärker gebildet ist. In Fig. 1 ist der Fußhebel 3 insbesondere in einem unbetätigten Zustand dargestellt. Der Fußhebel 3 bildet beispielsweise ein Bremspedal.

Der Lagerbock 2 umfasst zwei parallele Wangenteile 9, von denen aus Fig. 1 nur eines ersichtlich ist. Ferner umfasst der Lagerbock 2 einen die Wangenteile 9 miteinander verbindenden Basisteil 10, mittels welchem der Lagerbock 2 an einer Spritzwand 11 eines Kraftfahrzeugs befestigt ist. An dem Lagerbock 2 ist ein Stützarm 12 vorgesehen, mittels welchem der Lagerbock 2 an einem Querträger 13 des Kraftfahrzeugs befestigt ist. An einem dem Lagerelement 4 abgewandten, freien Ende weist der Fußhebel 3 eine Trittfläche 14 in Form einer, beispielsweise gekrümmten, Platte auf.

In den Wangenteilen 9 ist jeweils eine Ausnehmung 15 vorgesehen, in welche das Lagerelement 4 eingreift. Das Lagerelement 4 ist in den Ausnehmungen verschiebbar oder verlagerbar geführt. Die Ausnehmungen 15 bilden somit eine einen Bewegungsweg für das Lagerelement 4 definierende Führung, mittels welcher das Lagerelement 4 entlang des Bewegungswegs von einer ersten Lagerelementposition P1 in eine zweite Lagerelementposition P2 verschiebbar oder verlagerbar geführt ist. In Fig. 1 ist das Lagerelement 4 in der ersten Lagerelementposition P1 positioniert, in welcher die Fußhebelachse 5 auf einem Kreis 16 um einen Lagerort 17 liegt, an dem das Koppelglied 7 an dem Fußhebel 3 gelagert ist. Bevorzugt ist der Lagerort 17 durch den Mittelpunkt oder Kugelmittelpunkt des Kugelgelenks 6 definiert. Nach Verschiebung oder Verlagerung des Lagerelements 4 in die zweite Lagerelementposition P2 liegt die Fußhebelachse 5 ebenfalls auf dem Kreis 16. Gemäß der ersten Ausführungsform sind die Ausnehmungen 15 und somit auch der Bewegungsweg z.B. J-förmig.

An dem aus Fig. 1 ersichtlichen Wangenteil 9 ist ein Hebel 18 um eine Hebelachse 19 schwenkbar gelagert, der eine Aussparung 20 aufweist, in welche das Lagerelement 4 eingreift. Das Lagerelement 4 steht somit mit dem Hebel 18 in Mitnahmeverbindung und ist durch Schwenken des Hebels 18 um die Hebelachse 19 entlang des Bewegungswegs in den Ausnehmungen 15 verlagerbar. Gemäß der ersten Ausführungsform weist der Hebel 18 zwei die Aussparung 20 begrenzende Zinken 21 auf, die zu den freien Enden der Zinken 21 hin offen ist. Der Hebel 18 wird somit z.B. auch als Gabel bezeichnet.

Ferner ist an dem Lagerbock 2 ein an dem Hebel 18 angreifender Antrieb 22 vorgesehen, mittels welchem der Hebel 18 um die Hebelachse 19 relativ zu dem Lagerbock 2 schwenkbar ist. Der Antrieb 22 ist hier insbesondere als Linearantrieb ausgebildet und weist einen an dem Lagerbock 2 befestigten Stator 23 und ein relativ zu diesem translatorisch bewegbares Hubglied 24 auf, welches im Abstand zur Hebelachse 19 an einem an dem Hebel 18 vorgesehenen Betätigungsarm 25 angelenkt ist. Der Hebel 18 und der Antrieb 22 bilden eine Verstellvorrichtung, mittels welcher das Lagerelement 4 relativ zu dem Lagerbock 2 von der ersten Lagerelementposition P1 in die zweite Lagerelementposition P2 verlagerbar ist. Ferner kann z.B. die Führung und/oder können z.B. die Ausnehmungen 15 der Verstellvorrichtung zugerechnet werden.

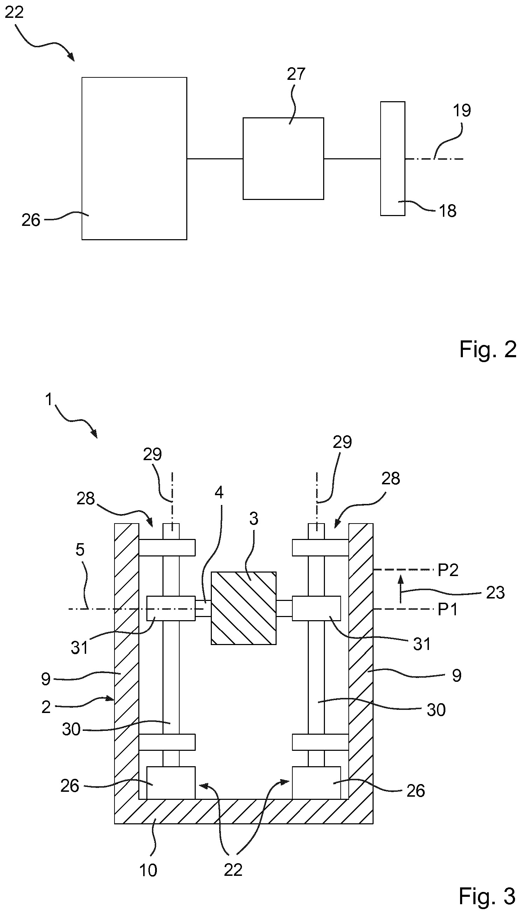

Aus Fig. 2 ist eine schematische Ansicht eines Antriebs 22 gemäß einer Abwandlung der ersten Ausführungsform ersichtlich, wobei zu der ersten Ausführungsform identische oder ähnliche Merkmale mit denselben Bezugszeichen wie bei der ersten Ausführungsform bezeichnet sind. Im Unterschied zur ersten Ausführungsform ist bei der Abwandlung der ersten Ausführungsform der Antrieb 22 als rotatorischer Antrieb ausgebildet, wobei der Antrieb 22 einen Rotationsmotor 26 und ein diesem nachgeschaltetes Schneckengetriebe 27 aufweist, welches abtriebsseitig am Ort der Hebelachse 19 an dem Hebel 18 angreift. Abgesehen von diesem Unterschied stimmt die Abwandlung der ersten Ausführungsform mit der ersten Ausführungsform überein, sodass zur weiteren Beschreibung der Abwandlung der ersten Ausführungsform auf die Beschreibung der ersten Ausführungsform verwiesen wird.

Aus Fig. 3 ist eine schematische Ansicht eines Fußhebelwerks 1 gemäß einer nicht beanspruchten zweiten Ausführungsform ersichtlich, wobei zu der ersten Ausführungsform identische oder ähnliche Merkmale mit denselben Bezugszeichen wie bei der ersten Ausführungsform bezeichnet sind.

Der Unterschied der zweiten Ausführungsform zur ersten Ausführungsform besteht insbesondere in der Ausgestaltung der Verstellvorrichtung, sodass die Beschreibung der zweiten Ausführungsform auf diesen Unterschied beschränkt ist.

Gemäß der zweiten Ausführungsform sind zwei Schraubgetriebe 28 vorgesehen, die jeweils eine an dem Lagerbock 2 um ihre Längsachse 29 drehbar gelagerte Gewindespindel 30 und eine auf diese aufgeschraubte Spindelmutter 31 aufweisen, an der das Lagerelement 4 um die Fußhebelachse 5 drehbar gelagert ist. Durch Drehen der Gewindespindeln 30 um ihre Längsachsen 29 ist somit das Lagerelement 4 von der ersten Lagerelementposition P1 in die zweite Lagerelementposition P2 in Richtung des Pfeils 32 verlagerbar. Der Antrieb 22 umfasst zwei Rotationsmotoren 26, mittels welchen die Gewindespindeln 30 zum Drehen um ihre jeweilige Längsachse 29 antreibbar sind. Die Schraubgetriebe 28 und der Antrieb 22 bilden somit eine Verstellvorrichtung, mittels welcher das Lagerelement 4 relativ zu dem Lagerbock 2 von der ersten Lagerelementposition P1 in die zweite Lagerelementposition P2 verlagerbar ist. Zur weiteren Beschreibung der zweiten Ausführungsform wird auf die Beschreibung der ersten Ausführungsform verwiesen.

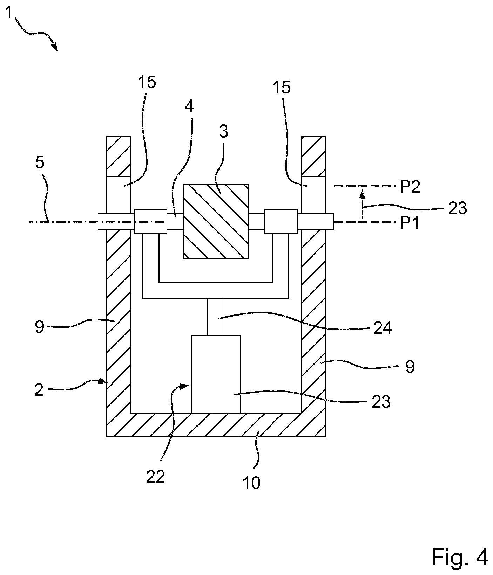

Aus Fig. 4 ist eine schematische Ansicht eines Fußhebelwerks 1 gemäß einer nicht beanspruchten dritten Ausführungsform ersichtlich, wobei zu der ersten Ausführungsform identische oder ähnliche Merkmale mit denselben Bezugszeichen wie bei der ersten Ausführungsform bezeichnet sind.

Der Unterschied der dritten Ausführungsform zur ersten Ausführungsform besteht insbesondere in der Ausgestaltung der Verstellvorrichtung, sodass die Beschreibung der dritten Ausführungsform auf diesen Unterschied beschränkt ist.

Gemäß der dritten Ausführungsform ist der Antrieb 22 als Linearantrieb ausgebildet, wobei der Antrieb 22 einen an dem Lagerbock 2 befestigten Stator 23 und ein relativ zu diesem translatorisch bewegbares Hubglied 24 aufweist, an welchem das Lagerelement 4 um die Fußhebelachse 5 drehbar gelagert ist. Ferner ist das Lagerelement 4 in den Ausnehmungen 15 verschiebbar oder verlagerbar geführt, die im Unterschied zur ersten Ausführungsform gerade verlaufen. Durch Betätigen des Antriebs 22 ist das Hubglied 24 translatorisch bewegbar, sodass das Lagerelement 4 von der ersten Lagerelementposition P1 in die zweite Lagerelementposition P2 in Richtung des Pfeils 32 verlagerbar.

Der Antrieb 22 bildet somit eine Verstellvorrichtung, mittels welcher das Lagerelement 4 relativ zu dem Lagerbock 2 von der ersten Lagerelementposition P1 in die zweite Lagerelementposition P2 verlagerbar ist. Ferner kann z.B. die Führung und/oder können z.B. die Ausnehmungen 15 der Verstellvorrichtung zugerechnet werden. Zur weiteren Beschreibung der dritten Ausführungsform wird auf die Beschreibung der ersten Ausführungsform verwiesen.

### Bezugszeichenliste

- 1: Fußhebelwerk
- 2: Lagerbock
- 3: Fußhebel
- 4: Lagerelement
- 5: Fußhebelachse
- 6: Kugelgelenk
- 7: Koppelglied
- 8: Fahrzeugkomponente / Bremskraftverstärker
- 9: Wangenteil des Lagerbocks
- 10: Basisteil des Lagerbocks
- 11: Spritzwand
- 12: Stützarm des Lagerbocks
- 13: Querträger
- 14: Trittfläche des Fußhebels
- 15: Ausnehmung in Wangenteil des Lagerbocks
- 16: Kreis
- 17: Lagerort
- 18: Hebel
- 19: Hebelachse
- 20: Aussparung in Hebel
- 21: Zinken des Hebels
- 22: Antrieb
- 23: Stator des Antriebs
- 24: Hubglied des Antriebs
- 25: Betätigungsarm des Hebels
- 26: Rotationsmotor
- 27: Schneckengetriebe
- 28: Schraubgetriebe
- 29: Drehachse der Gewindespindel
- 30: Gewindespindel
- 31: Spindelmutter
- 32: Bewegungsrichtung
- P1: erste Lagerelementposition
- P2: zweite Lagerelementposition

## Patentansprüche

1. Fußhebelwerk für ein Fahrzeug, mit einem Lagerbock (2), einem Fußhebel (3), einem Lagerelement (4), mittels welchem der Fußhebel (3) an dem Lagerbock (2) um eine Fußhebelachse (5) schwenkbar gelagert ist, die in einer ersten Lagerelementposition (P1) des Lagerelements (4) auf einem Kreis (16) oder Kreisbogen um einen an dem Fußhebel (3) vorgesehenen Lagerort (17) liegt, einem an dem Lagerort (17) an dem Fußhebel (3) gelagerten Koppelglied (7) zur Betätigung einer Fahrzeugkomponente (8) und einer mit dem Lagerbock (2) verbundenen Verstellvorrichtung, mittels welcher das Lagerelement (4) relativ zu dem Lagerbock (2) von der ersten Lagerelementposition (P1) in eine zweite Lagerelementposition (P2) verlagerbar ist, in der die Fußhebelachse (5) auf dem Kreis (16) oder Kreisbogen liegt, wobei an dem Lagerbock (2) eine einen Bewegungsweg für das Lagerelement (4) definierende Führung vorgesehen ist, mittels welcher das Lagerelement (4) entlang des Bewegungswegs von der ersten Lagerelementposition (P1) in die zweite Lagerelementposition (P2) verschiebbar geführt ist, und wobei die an dem Lagerbock (2) vorgesehene Führung durch wenigstens eine in dem Lagerbock (2) vorgesehene und sich entlang des Bewegungswegs erstreckende Ausnehmung (15) gebildet ist, in welche das Lagerelement (4) eingreift, wobei die erste Lagerelementposition (P1) durch ein erstes Ende der Ausnehmung (15) und die zweite Lagerelementposition (P2) durch ein zweites Ende der Ausnehmung (15) definiert ist, **dadurch gekennzeichnet, dass** die Ausnehmung einen geraden Hauptabschnitt, in dem das zweite Ende der Ausnehmung (15) liegt, und einen sich an diesen anschließenden gekrümmten Endabschnitt umfasst, in dem das erste Ende der Ausnehmung (15) liegt.

2. Fußhebelwerk nach Anspruch 1, **dadurch gekennzeichnet, dass** die Verstellvorrichtung einen Antrieb (22) aufweist.

3. Fußhebelwerk nach Anspruch 1 oder 2, **dadurch gekennzeichnet, dass** in der ersten Lagerelementposition (P1) das Lagerelement (4) durch eine Betätigung des Fußhebels (3) in eine Endlage der an dem Lagerbock (2) vorgesehenen Führung drückbar ist.

4. Fußhebelwerk nach einem der vorangehenden Ansprüche, **dadurch gekennzeichnet, dass** die Verstellvorrichtung einen um eine Hebelachse (19) schwenkbar an dem Lagerbock (2) gelagerten Hebel (18) aufweist, mit welchem das Lagerelement (4) in Mitnahmeverbindung steht, welches durch Schwenken des Hebels (18) um die Hebelachse (19) entlang des Bewegungswegs verlagerbar ist.

5. Fußhebelwerk nach Anspruch 4, **dadurch gekennzeichnet, dass** der Hebel (18) mit dem Antrieb (22) verbunden und mittels des Antriebs (22) um die Hebelachse (19) relativ zu dem Lagerbock (2) schwenkbar ist.

6. Fußhebelwerk nach Anspruch 4 oder 5, **dadurch gekennzeichnet, dass** in dem Hebel (18) eine Aussparung (20) vorgesehen ist, in welche das Lagerelement (4) eingreift.

7. Fußhebelwerk nach einem der vorangehenden Ansprüche, **dadurch gekennzeichnet, dass** das Koppelglied (7) gelenkig an dem Fußhebel (3) gelagert ist.

8. Fußhebelwerk nach einem der vorangehenden Ansprüche, **dadurch gekennzeichnet, dass** die Fahrzeugkomponente (8) ein Bremskraftverstärker ist.

## Claims

1. Foot lever assembly for a vehicle, with a bearing block (2), a foot lever (3), a bearing element (4) by means of which the foot lever (3) is mounted on the bearing block (2) pivotable about a foot lever axis (5), which lies in a first bearing element position (P1) of the bearing element (4) on a circle (16) or arc around a bearing location (17) provided on the foot lever (3), a coupling member (7) mounted at the bearing location (17) on the foot lever (3) for actuating a vehicle component (8), and an adjusting device connected to the bearing block (2) by means of which the bearing element (4) can be displaced relative to the bearing block (2) from the first bearing element position (P1) into a second bearing element position (P2) in which the foot lever axis (5) lies on the circle (16) or circular arc, wherein a guide defining a movement path for the bearing element (4) is provided on the bearing block (2) by means of which the bearing element (4) is guided displaceably along the movement path from the first bearing element position (P1) to the second bearing element position (P2), and wherein the guide provided on the bearing block (2) is formed by at least one recess (15) which is provided in the bearing block (2) and extends along the movement path and into which the bearing element (4) engages, wherein the first bearing element position (P1) is defined by a first end of the recess (15) and the second bearing element position (P2) is defined by a second end of the recess (15), **characterised in that** the recess comprises a straight main section, in which the second end of the recess (15) lies, and a curved end section adjacent thereto, in which the first end of the recess (15) lies.

2. Foot lever assembly according to claim 1, **characterised in that** the adjusting device has a drive (22).

3. Foot lever assembly according to claim 1 or 2, **characterised in that**, in the first bearing element position (P1), the bearing element (4) can be pressed into an end position of the guide provided on the bearing block (2) by actuating the foot lever (3).

4. Foot lever assembly according to any one of the preceding claims, **characterised in that** the adjusting device has a lever (18) mounted on the bearing block (2) pivotable about a lever axis (19), with which the bearing element (4) is in driving connection, which is displaceable by pivoting the lever (18) about the lever axis (19) along the movement path.

5. Foot lever assembly according to claim 4, **characterised in that** the lever (18) is connected to the drive (22) and, by means of the drive (22), is pivotable about the lever axis (19) relative to the bearing block (2).

6. Foot lever assembly according to claim 4 or 5, **characterised in that** a recess (20) is provided in the lever (18) into which the bearing element (4) engages.

7. Foot lever assembly according to any one of the preceding claims, **characterised in that** the coupling link (7) is mounted to articulate on the foot lever (3).

8. Foot lever assembly according to any one of the preceding claims, **characterised in that** the vehicle component (8) is a brake booster.

## Revendications

1. Mécanisme à pédale pour un véhicule, comprenant un support de palier (2), une pédale (3), un élément de palier (4) au moyen duquel la pédale (3) est montée sur le support de palier (2) de manière à pouvoir pivoter autour d'un axe de pédale (5) qui, dans une première position d'élément de palier (P1) de l'élément de palier (4), se trouve sur un cercle (16) ou arc de cercle autour d'un emplacement de palier (17) prévu sur la pédale (3), un organe d'accouplement (7) monté sur l'emplacement de palier (17) sur la pédale (3) pour l'actionnement d'un composant de véhicule (8) et un dispositif de réglage relié au support de palier (2), au moyen duquel l'élément de palier (4) peut être déplacé par rapport au support de palier (2) à partir de la première position d'élément de palier (P1) dans une deuxième position d'élément de palier (P2), dans laquelle l'axe de pédale (5) se trouve sur le cercle (16) ou l'arc de cercle, dans lequel un guidage définissant une voie de déplacement pour l'élément de palier (4) est prévu sur le support de palier (2), au moyen duquel l'élément de palier (4) est guidé de manière coulissante le long de la voie de déplacement à partir de la première position d'élément de palier (P1) dans la deuxième position d'élément de palier (P2), et dans lequel le guidage prévu sur le support de palier (2) est formé par au moins un évidement (15) prévu dans le support de palier (2) et s'étendant le long de la voie de déplacement, dans laquelle s'engage l'élément de palier (4), dans lequel la première position d'élément de palier (P1) est définie par une première extrémité de l'évidement (15) et la deuxième position d'élément de palier (P2) est définie par une deuxième extrémité de l'évidement (15), **caractérisé en ce que** l'évidement comprend une section principale droite, dans laquelle se trouve la deuxième extrémité de l'évidement (15), et une section d'extrémité courbée se raccordant à celle-ci dans laquelle se trouve la première extrémité de l'évidement (15).

2. Mécanisme à pédale selon la revendication 1, **caractérisé en ce que** le dispositif de réglage présente un entraînement (22).

3. Mécanisme à pédale selon la revendication 1 ou 2, **caractérisé en ce que** dans la première position d'élément de palier (P1), l'élément de palier (4) peut être pressé par un actionnement de la pédale (3) dans une position finale du guidage prévu sur le support de palier (2).

4. Mécanisme à pédale selon l'une quelconque des revendications précédentes, **caractérisé en ce que** le dispositif de réglage présente un levier (18) monté sur le support de palier (2) de manière à pouvoir pivoter autour d'un axe de levier (19), avec lequel l'élément de palier (4) est en liaison d'entraînement, lequel peut être déplacé le long de la voie de déplacement par pivotement du levier (18) autour de l'axe de levier (19).

5. Mécanisme à pédale selon la revendication 4, **caractérisé en ce que** le levier (18) est relié à l'entraînement (22) et peut pivoter au moyen de l'entraînement (22) autour de l'axe de levier (19) par rapport au support de palier (2).

6. Mécanisme à pédale selon la revendication 4 ou 5, **caractérisé en ce qu'**un évidement (20), dans lequel s'engage l'élément de palier (4), est prévu dans le levier (18).

7. Mécanisme à pédale selon l'une quelconque des revendications précédentes, **caractérisé en ce que** l'organe d'accouplement (7) est monté de manière articulée sur la pédale (3).

8. Mécanisme à pédale selon l'une quelconque des revendications précédentes, **caractérisé en ce que** le composant de véhicule (8) est un servofrein.
